# EUROPÄISCHE PATENTSCHRIFT

(11) **EP 2 225 083 B1**
(45) Veröffentlichungstag und Bekanntmachung des Hinweises auf die Patenterteilung: **21.08.2013**
(21) Anmeldenummer: 08858690.4
(22) Anmeldetag: 06.12.2008
(51) Int. Cl.: B29C 49/04, B29C 47/04, B29C 51/02

(54) **VERFAHREN ZUR HERSTELLUNG EINES VORFORMLINGS SOWIE DIE VERWENDUNG DES VERFAHRENS**
PROCESS FOR PRODUCING A PREFORM AND USE THE OF THE PROCESS
PROCÉDÉ DE FABRICATION DE UNE PRÉ-ÉBAUCHE ET L'UTILISATION DU PROCÉDÉ

(30) Priorität: 11.12.2007 DE 102007059839
(43) Veröffentlichungstag der Anmeldung: 08.09.2010
(73) Patentinhaber: Feuerherm, Harald, 53840 Troisdorf (DE)
(72) Erfinder: FEUERHERM, Harald, 53840 Troisdorf (DE); KAPPEN, Günther, 53840 Troisdorf (DE)
(74) Vertreter: Albrecht, Rainer Harald
(86) Internationale Anmeldenummer: PCT/EP2008/010360
(87) Internationale Veröffentlichungsnummer: WO 2009/074272

(56) Entgegenhaltungen:
- EP-A- 1 013 401
- EP-A- 1 334 817
- US-A- 3 691 267
- US-A- 4 802 833
- US-A1- 2006 141 184

## Beschreibung

Die Erfindung betrifft ein Verfahren zur Herstellung eines schlauchförmigen Vorformlings, der mindestens eine Sollbruchstelle aufweist und im thermoplastischen Zustand einer Blasformanlage zugeführt wird, sowie eine Vorrichtung zur Durchführung des Verfahrens. Der Vorformling ist entlang seiner Sollbruchstellen auftrennbar, wobei flächige Bahnen entstehen, aus denen in einer Blasformanlage schalenförmige Teile gebildet werden, die anschließend wieder, z. B. nach Einbringen von Baugruppen, zu einem Hohlkörper vereinigt werden können.

Bei einem aus DE 103 55 818 A1 bekannten Verfahren werden die Sollbruchstellen in einem schlauchförmigen Vorformling mit scharfen Trennstegen gebildet, die am Austritt einer Extrusionsdüse angeordnet sind. Durch die Trennstege wird der Vorformling an diesen Stellen so dünn ausgeformt, dass er beim Ergreifen durch eine Transporteinrichtung gezielt aufreißt. Die flächigen Vorformlinge werden dann mittels der Transporteinrichtung in eine Blasform eingelegt und zu schalenförmigen Teilen geformt.

Bei einem aus EP 1 334 817 A1 bekannten Verfahren wird ein schlauchförmiger Vorformling durch Aufteilen der Schmelzeströmung innerhalb eines Extrusionskopfes getrennt. Zwischen die aufgeteilten Materialströme wird zweckmäßig ein dünner Trennstreifen eines Trennmittels eingebracht, das sich nicht mit dem übrigen Exdrudat verbindet. Aus den aus dem Extrusionskopf austretenden Bahnen werden in einer Blasform schalenförmige Teile geformt, die anschließend wieder zu einem Hohlkörper vereinigt werden. Die Aufteilung des schlauchförmigen Vorformlings wird bei dem bekannten Verfahren dazu genutzt, um in den Hohlkörper einzubringende Einbauten zwischen den Materialbahn so anzuordnen, dass die Einbauten den Vorformling nicht vor Beginn des Blasformvorganges berühren.

Gemäß einem aus US 2006/014184 A1 bekannten Verfahren zur Herstellung blasgeformter Teile wird in einem Extrusionskopf eine ringförmige Strömung aus einer Kunststoffschmelze gebildet und die Kunststoffschmelze einer Ringspaltdüse zugeführt, die einen von einem Dorn und einem Düsenring begrenzten Ringspalt aufweisen. Aus dem Ringspalt tritt ein schlauchförmiger Vorformling aus, dessen Wandstärke zumindest in Vorformlingslängsrichtung durch eine mit der Vorformlingsextrusion ablaufende programmgesteuerte Änderung der Düsenspaltbreite verändert wird. Der Vorformling wird in Längsrichtung aufgetrennt, wobei die resultierenden Vorformlingsabschnitte im thermoplastischen Zustand einer Blasformanlage zugeführt werden.

Bei den bekannten Verfahren ist es schwierig, die aufgetrennten Materialbahnen richtig in der Blasform zu positionieren und ihre Zuordnung so beizubehalten, dass die Schalen unter Einhaltung der erforderlichen Toleranzen wieder zu einem Hohlkörper zusammengefügt werden können. Die bekannten Verfahren, bei denen der Vorformling während oder kurz nach der Extrusion getrennt wird, sind daher nicht sicher beherrschbar.

Vor diesem Hintergrund liegt der Erfindung die Aufgabe zugrunde, die Positionierung der entlang einer Sollbruchstelle trennbaren Vorformlingsabschnitte in der Blasform einer Blasformanlage zu verbessern.

Gegenstand der Erfindung und Lösung dieser Aufgabe ist ein Verfahren nach Anspruch 1. Bei dem erfindungsgemäßen Verfahren wird ein Vorformling erzeugt, der mindestens eine Sollbruchstelle aufweist. Die Sollbruchstelle kann aus einer durch Zugabe eines Additivs zur Kunststoffschmelze gebildeten

Bindenaht bestehen, deren Zugfestigkeit geringer ist als die Zugfestigkeit eines im Abstand zur Sollbruchstelle angeordneten und mit derselben Wandstärke geformten Vorformlingsabschnittes. Die Sollbruchstelle beruht nicht auf einer Dickenreduzierung der Wandstärke sondern auf einer gezielt eingebrachten materialmäßigen Inhomogenität. Die Wandstärke des Vorformlings ist an der Sollbruchstelle ebenso groß wie im benachbarten Bereich, wenn man von etwaigen geringfügigen Abweichungen absieht, die auf viskoelastischen Effekten beruhen. Die Zugfestigkeit an der Sollbruchstelle wird durch die Verwendung eines Additivs herabgesetzt, wobei durch die materialmäßige Auswahl und/oder Dosierung des Additivs die gewünschte Festigkeitsminderung gezielt einstellbar ist. Der nach dem erfindungsgemäßen Verfahren hergestellte Vorformling tritt als Schlauch aus einem Extrusionskopf aus und ist als stabiler schlauchförmiger Vorformling in einer Blasform positionierbar. Dabei werden keine aufwendigen zusätzlichen Führungs- und Haltevorrichtungen benötigt. Die Zugfestigkeit der erfindungsgemäßen Sollbruchstelle im schlauchförmigen Vorformling ist erfindungsgemäß so eingestellt, dass der Vorformling in einem nachfolgenden Prozessschritt gezielt entlang der Sollbruchstelle getrennt werden kann. Die Auftrennung des Vorformlings entlang seiner Sollbruchstelle erfolgt beim Öffnen der Blasform, indem der Vorformling durch Druckbeaufschlagung oder mittels Hinterschneidungen in den Blasformhälften der sich öffnenden Blasform fixiert wird. Es besteht auch die Möglichkeit, den Vorformling durch gezielte mechanische Beanspruchungen beim Einformen in die Blasform oder durch Aufgabe von Vorblasluft zu trennen. Stets ist aber sichergestellt, dass der erfindungsgemäße Vorformling als Schlauch extrudiert sowie in der Blasform positioniert wird und erst zu einem späteren, definierten Zeitpunkt während oder nach dem Einformen in einem nachfolgenden Prozessschritt getrennt wird.

Vorzugsweise weist der bei dem erfindungsgemäβen Verfahren erzeugte schlauchförmige Vorformling mindestens zwei Sollbruchstellen auf. Die Möglichkeiten für die Gestaltung und Anordnung der Sollbruchstellen sind vielfältig. Die Sollbruchstelle kann sich in Längsrichtung des Vorformlings gradlinig oder mit einem Kurvenprofil erstrecken. Sie kann sich über die gesamte Länge des Vorformlings erstrecken. Um Handhabbarkeit des schlauchförmigen Vorformlings zu verbessern, kann es ferner zweckmäßig sein, dass sich die Sollbruchstelle nur über einen Abschnitt des Vorformlings erstreckt und dass ein oberer und/oder unterer Abschnitt des Vorformlings, der beim Blasformen zu einem von dem Blasformteil abzutrennenden Abfallbutzen umgeformt wird, keine Schwächung durch eine Sollbruchstelle aufweist. Diese Ausgestaltung ermöglicht es, den Vorformling unter Verwendung üblicher Spreizvonichtungen vor dem Schließen einer Blasform zu fixieren und exakt zu positionieren, ohne dass die Gefahr besteht, dass der schlauchförmige Vorformling schon aufreißt.

Der Vorformling kann ferner mit einer horizontal verlaufenden Sollbruchstelle ausgestattet sein, die vorzugsweise als Ring ausgebildet ist. Auch die horizontale Sollbruchstelle kann ein Kurvenprofil aufweisen. Horizontal und in Schlauchlängsrichtung verlaufende Sollbruchstellen können ferner miteinander kombiniert werden.

Die Bindenaht, welche die Sollbruchstelle bildet, erstreckt sich im Regelfall über die gesamte Wandstärke des Vorformlings. Im Rahmen der Erfindung liegt es aber auch, dass die festigkeitsmindernde Bindenaht sich nur über einen Teil der Wandstärke erstreckt und dass beispielsweise ein innerer oder äußerer Wandbereich im Bereich der Sollbruchstellen keine materialmäßige Schwächung aufweist. Die beschriebenen Maßnahmen ermöglichen es, die Zugfestigkeit der Sollbruchstelle so einzustellen, dass der schlauchförmige Vorformling in einem späteren Prozessschritt definiert getrennt werden kann.

Die Bindenaht besteht vorzugsweise aus einem Streifen aus einem Material, das mit der Kunststoffschmelze des Vorformlings eine Verbindung geringer Festigkeit eingeht. Die Kunststoffschmelze kann als Coextrudat auch mehrschichtig ausgebildet sein. Beim Blasformen von Kunststoffkraftbehältern werden regelmäßig mehrschichtig koextrudierte Vorformlinge verwendet, die Innenund Außenschichten aus einem Polyolefin sowie eine Barriereschicht z. B. aus EVOH aufweisen. Für einen stabilen Schichtenaufbau ist es dabei erforderlich, zwischen der Barriereschicht und den angrenzenden polyolefinischen Schichten eine geeignete Haftvermittlerschicht vorzusehen. In Fällen, in denen die Kunststoffschmelze mindest eine polyolefinische Schicht, eine Barriereschicht aus EVOH und eine Haftvermittlerschicht zwischen der polyolefinischen Schicht und der Barriereschicht aufweist, kann die Sollbruchstelle des Vorformlings aus dem Material der Barriereschicht, z. B. EVOH erzeugt werden. Diese Ausgestaltung der Erfindung hat mehrere verfahrenstechnische Vorteile. Ein wirtschaftlicher Blasformprozess erfordert es, dass Ausschussteile sowie Abfallstücke gemahlen und als Rohstoff in den Extrusionsprozess zurückgeführt werden. Das Material der Barriereschicht beeinträchtigt den Recyclingvorgang nicht. Die für die Sollbruchstelle notwendige Schmelze kann ferner aus dem für die Barriereschicht benötigten Schmelzestrom abgezweigt werden, so dass kein weiteres Anlageteil mit Vorlagenbehältern und dergleichen benötigt wird.

Die Bindenaht, welche die Sollbruchstelle bildet, kann ferner ein Trennmittel aufweisen, wobei die Trennmittelmenge so bemessen ist, dass der Vorformling erst bei einem späteren Formgebungsprozess, z. B. beim Öffnen der Blasform oder bei der Aufweitung des Vorformlings in der Blasform, entlang der Sollbruchstelle aufreißt.

Die Bindenaht kann schließlich eine schaumartige Struktur aufweisen, die durch Zugabe eines Treibmittels erzeugt wird und festigkeitsmindernd wirkt. Das Treibmittel kann in die Kunststoffschmelze injiziert oder mit einem Material, das mit der Kunststoffschmelze des Vorformlings eine Verbindung geringer Festigkeit eingeht, kombiniert und zusammen mit diesem Material zugeführt werden. Über den Anteil der porigen Schicht im Querschnitt und ihrer Porengröße kann man die Festigkeit der Sollbruchstelle bestimmen.

Bei allen zuvor beschriebenen Ausführungen kann die Wandstärke des Vorformlings sich unabhängig von dem Verlauf der Sollbruchstelle in Längsrichtung des Vorformlings und/oder in Umfangsrichtung ändern. In an sich bekannter Weise ist das Wandstärkenprofil des Vorformlings regelmäßig auf die nachfolgende Blasformgebung so abgestimmt, dass der aus dem Vorformling gefertigte Hohlkörper an allen Stellen eine vorgegebene Wandstärke aufweist. Daher besitzt der schlauchförmige Vorformling an den Stellen, die in der Blasform einer starken Reckung unterliegen, eine größere Wandstärke als die in den Abschnitten des Vorformlings, die in der Blasform weniger stark gedehnt werden. Bei allen zuvor beschriebenen Ausführungen kann die Kunststoffschmelze ferner mehrere durch Coextrusion gebildete Schichten aufweisen, so dass aus dem Vorformling mehrschichtige Hohlkörper geformt werden können.

Die Schmelzeströmung kann zur Erzeugung einer Inhomogenität lokal gekühlt oder erhitzt werden. Die Inhomogenität zur Erzeugung einer Sollbruchstelle kann ferner dadurch gebildet werden, dass ein Teil der Kunststoffschmelze vernetzt wird.

Gemäß einer bevorzugten Ausführung des erfindungsgemäßen Verfahrens wird die Inhomogenität mit einem Schmelzeteiler erzeugt, der radial in den Fließkanal vorsteht, wobei die Schmelze den Schmelzeteiler umströmt und sich stromabwärts vereinigt ohne wieder vollständig durch Stoffschluss zu verbinden. Entlang der Zusammenschlussstelle bildet sich dabei eine Bindenaht, die im Vorformling oder in einem vorgeformten Hohlkörper als Sollbruchstelle wirkt. Die Zugfestigkeit der Bindenaht kann dadurch beeinflusst werden, dass im Schmelzeteiler ein Material zugeführt wird, das an der stromabwärtigen Seite des Schmelzeteilers mit der Kunststoffschmelze des Vorformlings eine Verbindung geringer Festigkeit eingeht. Das Material kann mit einem Trennmittel versetzt sein, wobei durch die Dosierung des Trennmittels die Festigkeit der Sollbruchstelle veränderbar ist.

Im Rahmen der Erfindung liegt es auch, dass das Material zur Erzeugung einer Bindenaht bzw. Sollbruchstelle unter Überdruck durch Düsen in den Schmelzestrom gedrückt wird. Der Überdruck bewirkt, dass die Hauptschmelze verdrängt wird. Dabei bildet sich entlang des zugeführten Materialstroms eine Bindenaht, die als Sollbruchstelle wirkt. Abhängig von der Zuführung des Materialstroms erstreckt sich die Sollbruchstelle in Längsrichtung des Vorformlings oder in dessen Umfangsrichtung. Die beschriebene Verfahrensvariante hat den Vorteil, dass kein Schmelzeteiler eingesetzt werden muss. Es kann mit Düsen gearbeitet, die zur Abgabe des für die Sollbruchstelle benötigten Materials geöffnet und dann wieder geschlossen werden.

Sofern es sich bei der Kunststoffschmelze um ein Coextrudat mit mindestens einer polyolefinischen Schicht, einer Barriereschicht, z. B. aus EVOH und einer Haftvermittlerschicht zwischen der polyolefinischen Schicht und der Barriereschicht handelt, wird zur Herstellung der Sollbruchstelle vorzugsweise das Material der Barriereschicht, z. B. EVOH verwendet, das im Schmetzeteiler zugeführt wird und mit der polyolefinischen Schicht des Extrudats eine Verbindung geringer Festigkeit bildet. Als Material zur Erzeugung der Bindenaht bzw. Sollbruchstelle wird man generell ein Material bevorzugen, welches bereits Bestandteil mindestens einer Schicht des Vorformlings ist, welches sauber von den Abfallbutzen getrennt werden kann und welches eine Wiederverwendung des Butzenanteils nicht negativ beeinflusst.

Der Schmelzeteiler kann die gesamte Breite des Fließkanals überbrücken. Das erfindungsgemäße Verfahren kann aber auch so ausgelegt werden, dass nicht der gesamte Schmelzefluss geteilt wird, sondern dass eine unbehandelte Schmelzeschicht bestehen bleibt. In diesem Fall überbrückt der Schmelzeteiler von der Fließkanalaußenseite oder der Fließkanalinnenseite ausgehend nur einen Teil des Fließkanals.

In weiterer Ausgestaltung lehrt die Erfindung, dass der Schmelzeteiler während der Vorformlingsextrusion radial so verstellt wird, dass sich in Vorformlingslängsrichtung unterschiedlich stark ausgeprägte Inhomogenitäten bilden. Dadurch ist es möglich, in dem Vorformling Sollbruchstellen zu bilden, die sich nur über einen Längenabschnitt des Vorformlings erstrecken. Vorzugsweise wird die Radialverstellung des Schmelzeteilers so gesteuert, dass sich die festigkeitsmindernde Bindenaht nur über einen Abschnitt des Vorformlings erstreckt, und dass Endabschnitte des Vorformlings, die beim Blasformen zu einem von dem Blasformteil abzutrennenden Abfallbutzen umgeformt werden, keine Schwächung durch eine an der Sollbruchstelle aufweisen.

Der Schmelzeteiler kann während der Vorformlingsextrusion in Umfangsrichtung verschwenkt werden, um in der Schmelzeströmung eine Inhomogenität zu erzeugen, die in dem Vorformling eine Sollbruchstelle bildet, welche sich mit einem Kurvenprofil in Vorformlingslängsrichtung erstreckt. Ferner besteht die Möglichkeit, den Schmelzeteiler um seine Achse zu drehen bzw. zu verschwenken, um den Grad der erzeugten Inhomogenität und/oder die umfangsseitige Position, an der die Inhomogenität in der Schmelzeströmung erzeugt wird, zu verändern. Die Bewegungen des Schmelzeteilers werden von einem Programm gesteuert, das synchron mit dem Programm zur Änderung der Düsenspaltbreite abläuft. Sofern der Vorformling mehrere Sollbruchstellen aufweist, können die Bewegungen der Sollbruchstellen bildenden Schmelzeteiler synchron oder auch voneinander abweichend sein.

Eine weitere Ausgestaltung des erfindungsgemäßen Verfahren zur Erzeugung einer Sollbruchstelle sieht vor, dass in die Schmelzeströmung ein Treibmittel injiziert wird, welches in der Kunststoffschmelze eine Porenstruktur als festigkeitsmindernde, lokal begrenzte Inhomogenität erzeugt. Das Treibmittel kann durch mindestens eine am inneren oder äußeren Umfang des Fließkanals angeordnete Düse zugeführt werden. Wenn die Düse an einem drehbaren Ring angeordnet wird, kann durch Drehung des Rings während der Vorformlingsextrusion eine festigkeitsmindernde Inhomogenität des Schmelzestroms erzeugt werden, die in dem Vorformling eine Sollbruchstelle bildet, welche sich mit einem Kurvenprofil in Vorformlingslängsrichtung erstreckt. Zum Erzeugen einer horizontal sich erstreckenden oder ringförmigen Sollbruchstelle wird das Treibmittel durch eine Mehrzahl in Umfangsrichtung nebeneinander angeordneter Düse oder durch eine am Umfang des Fließkanals angeordnete ringförmige Schlitzdüse zugeführt. Die Treibmittelmenge wird dabei als Impuls aufgegeben, so dass die Inhomogenität sich im Wesentlichen horizontal erstreckt und vorzugsweise einen Ring bildet.

Bei dem erfindungsgemäßen Verfahren kann in an sich bekannter Weise durch Änderung der Fließkanageometrie innerhalb der Ringspaltdüse das Wandstärkenprofil des Vorformlings in Umfangsrichtung beeinflusst werden. Die Änderung der Fließkanalgeometrie ist unabhängig von dem Verlauf der zuvor in die Kunststoffschmelze eingebrachten Inhomogenität. Ferner kann die Kunststoffschmelze stets auch mehrere durch Coextrusion gebildete Schichten aufweisen, so dass aus dem Vorformling auch mehrschichtige Hohlkörper blasgeformt werden können.

Im Vergleich zu dem eingangs beschriebenen Stand der Technik, bei dem flächige Vorformlinge hergestellt und mittels geeigneter Transporteinrichtungen separat relativ zur Blasform positioniert werden müssen, weist das erfindungsgemäße Verfahren erhebliche Vorteile auf. Der schlauchförmige Vorformling kann mit den in der Praxis bereits bewährten Maßnahmen in der Blasform positioniert werden. Der Blasformprozess ist dadurch gut beherrschbar. Vorteilhaft ist auch, dass der schlauchförmige Vorformling gegenüber der Kavität der Blasform geschlossen ist. Bestehende Extrusionsköpfe und Düsenwerkzeuge können ohne Modifikation für das erfindungsgemäße Verfahren eingesetzt werden. Ferner können alle bekannten Regelungsverfahren zur Herstellung von schlauchförmigen Vorformlingen ohne Einschränkung verwendet werden, um schlauchförmige Vorformlinge herzustellen, deren Wandstärkenverteilung auf den nachfolgenden Blasformprozess optimal abgestimmt ist. Durch das erfindungsgemäße Verfahren ist es schließlich möglich, die Sollbruchstellen für jedes herzustellende Produkt so auszulegen, dass die Trennung zu jedem beliebigen späteren Verfahrensschritt in definierter Weise erfolgen kann.

Gegenstand der Erfindung ist auch die Verwendung einer Vorrichtung nach Anspruch 14 zur Durchführung des beschriebenen Verfahrens. Bevorzugte Ausgestaltungen der Vorrichtung für die Verwendung in diesem Verfahren werden in den Ansprüchen 15 bis 22 beschrieben und im Folgenden anhand von Ausführungsbeispielen ausführlich erläutert. Es zeigen schematisch:
- **Fig. 1**: einen schlauchförmigen Vorformling, der in Längsrichtung verlaufende Sollbruchstellen aufweist,
- **Fig. 2a und 2b**: weitere Ausgestaltungen des schlauchförmigen Vorformlings,
- **Fig. 3a und 3b**: Querschnitte durch mehrschichtig ausgebildete schlauchförmige Vorformlinge,
- **Fig. 4a und 4b**: weitere Ausführungsbeispiele des schlauchförmigen Vorformlings ebenfalls im Querschnitt,
- **Fig. 5**: den Längsschnitt durch eine Vorrichtung zur Herstellung schlauchförmiger Vorformlinge, die eine oder mehrere Sollbruchstellen aufweisen und im thermoplastischen Zustand einer Blasformanlage zugeführt werden,
- **Fig. 6**: die stirnseitige Ansicht eines Schmelzeteilers aus der in Fig. 5 dargestellten Vorrichtung,
- **Fig. 7 bis 9**: weitere Ausgestaltungen der Vorrichtung im Längsschnitt.

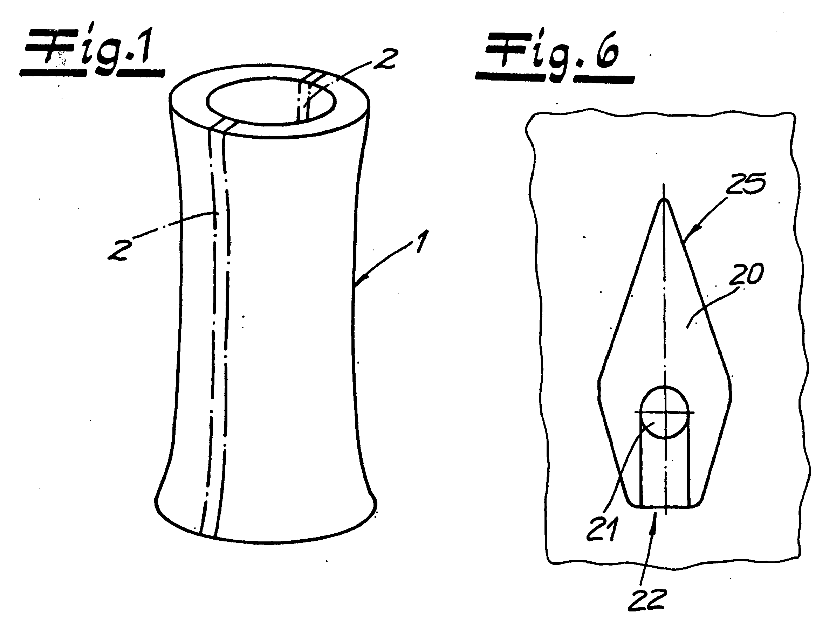

In Fig. 1 ist ein erfindungsgemäß ausgebildeter schlauchförmiger Vorformling 1 aus einer Kunststoffschmelze zur Herstellung blasgeformter Teile dargestellt. Der Vorformling 1 weist in Längsrichtung verlaufende Sollbruchstellen 2 auf, entlang denen der Vorformling in einem späteren Prozessschritt getrennt werden kann. Der im thermoplastifizierten Zustand aus einer Ringspaltdüse austretende Vorformling 1 ist stabil und kann ohne zusätzliche Führungs- und Haltevorrichtungen reproduzierbar in der Blasform einer Blasformanlage positioniert werden. Während oder nach dem Einformen in der Blasform kann der schlauchförmige Vorformling entlang seiner Sollbruchstellen 2 getrennt werden. Vorzugsweise sind die Sollbruchstellen 2 so ausgelegt, dass der schlauchförmige Vorformling 1 nach dem Blasvorgang beim Öffnen der Blasform an den Sollbruchstellen dadurch aufreißt, dass der Vorformling durch Druckbeaufschlagung oder durch Hinterschneidungen in den Blasformhälften fixiert wird.

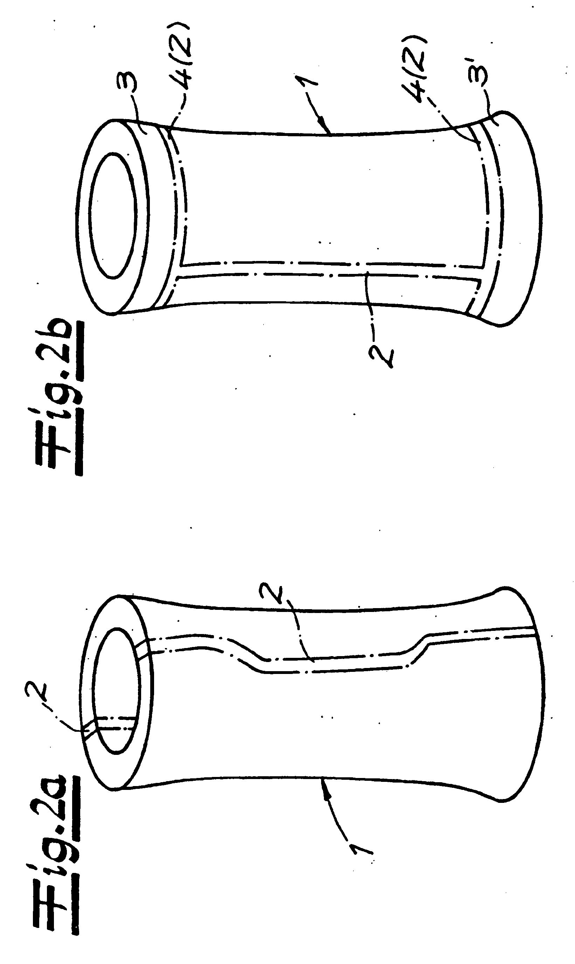

Die Sollbruchstellen 2 bestehen aus einer durch Zugabe eines Additivs zur Kunststoffschmelze gebildeten Bindenaht, deren Zugfestigkeit geringer ist als die Zugfestigkeit eines im Abstand zur Sollbruchstelle angeordneten und mit derselben Wandstärke geformten Vorformlingabschnittes. Die Wandstärke des schlauchförmigen Vorformlings ist an den Sollbruchstellen ebenso groß wie in benachbarten Abschnitten. Im Beispiel der Fig. 1 sind zwei Sollbruchstellen 2 vorgesehen, die sich in Längsrichtung des Vorformlings 1 gradlinig über die gesamte Länge des Vorformlings 1 erstrecken. Der Vorformling 1 kann entlang diesen beiden Sollbruchstellen 2 in zwei Hälften aufgetrennt werden. Gemäß der Darstellung in Fig. 2a kann sich die Bindenaht, welche die Sollbruchstelle 2 bildet, in Längsrichtung des Vorformlings auch mit einem Kurvenprofil erstrecken. Im Falle mehrerer Sollbruchstellen 2 kann der Kurvenverlauf der Sollbruchstellen 2 identisch oder voneinander abweichend ausgeführt sein.

Im Ausführungsbeispiel der Fig. 2b erstreckt sich die Sollbruchstelle 2 in Längsrichtung des Vorformlings nur über einen Abschnitt des Vorformlings 1. Ein oberer sowie ein unterer Abschnitt 3, 3' des Vorformlings, der beim Blasformen zu einem von dem Blasformteil abzutrennenden Abfallbutzen umgeformt wird, weist dagegen keine Schwächung durch eine Sollbruchstelle auf. Des Weiteren sind an dem Vorformling zwei ringförmige, d. h. horizontal verlaufende Sollbruchstellen 4 vorgesehen, die ebenfalls durch Zugabe eines Additivs zur Kunststoffschmelze gebildet worden sind.

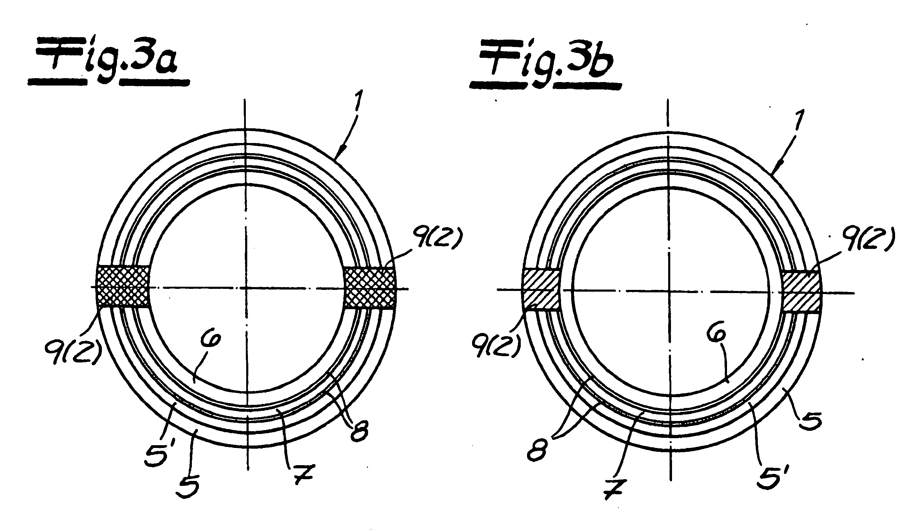

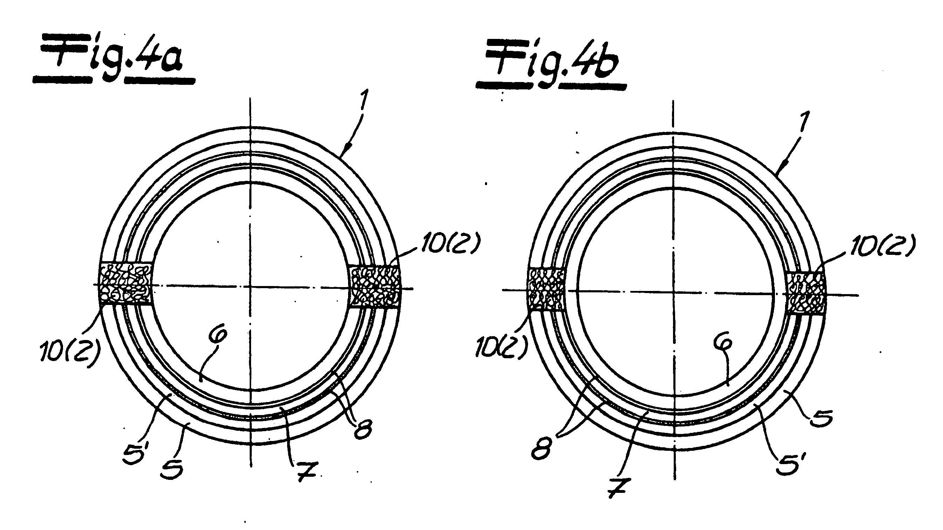

Die Kunststoffschmelze des Vorformlings kann als Coextrudat mehrere Schichten aufweisen, wie dies in Fig. 3a und 3b dargestellt ist. Bei der Fertigung von Kunststoffkraftbehältern werden beispielsweise Vorformlinge 1 verwendet, die eine polyolefinische Außenschicht 5, eine Schicht 5' aus Rezyklat eine polyolefinische Innenschicht 6 sowie eine Barriereschicht 7, z. B. aus EVOH aufweisen, wobei zwischen den polyolefinischen Schichten 5, 6 und der Barriereschicht 7 Haftvermittlerschichten 8 notwendig sind, damit ein fester Schichtenverbund gewährleistet ist. Die Bindenaht, welche die Sollbruchstelle 2 bildet, besteht aus einem Streifen aus einem Material 9, das mit der Kunststoffschmelze des Vorformlings 1 eine Verbindung geringer Festigkeit eingeht. In den beschriebenen Ausführungsbeispielen kann die Bindenaht insbesondere aus EVOH bestehen, welches ohne Zwischenschaltung eines Haftvermittlers mit den polyolefinischen Schichten 5, 6 eine Verbindung geringer Festigkeit eingeht. Im Ausführungsbeispiel der Fig. 3a erstreckt sich die festigkeitsmindernde Bindenaht über die gesamte Wandstärke des Vorformlings 1, während im Ausführungsbeispiel der Fig. 3b die festigkeitsmindernde Bindenaht sich nur über einen Teil der Wandstärke erstreckt. Gemäß den Ausführungsbeispielen in den Fig. 4a und 4b weist die Bindenaht eine schaumartige Struktur 10 auf, die durch Injektion eines Treibmittels in die Kunststoffschmelze erzeugt wird und festigkeitsmindernd wirkt. Auch die entsprechend in Fig. 4a und 4b gestaltete poröse Bindenaht kann sich als Sollbruchstelle 2 über die gesamte Wandstärke oder lediglich nur einen Teil der Wandstärke erstrecken. Das Treibmittel kann so zugeführt werden, dass die schaumartige Struktur sich nur in einem mittleren Bereich der Wandstärke ausbildet und innere und äußere Schichten des Vorformlings ungeschwächt bleiben.

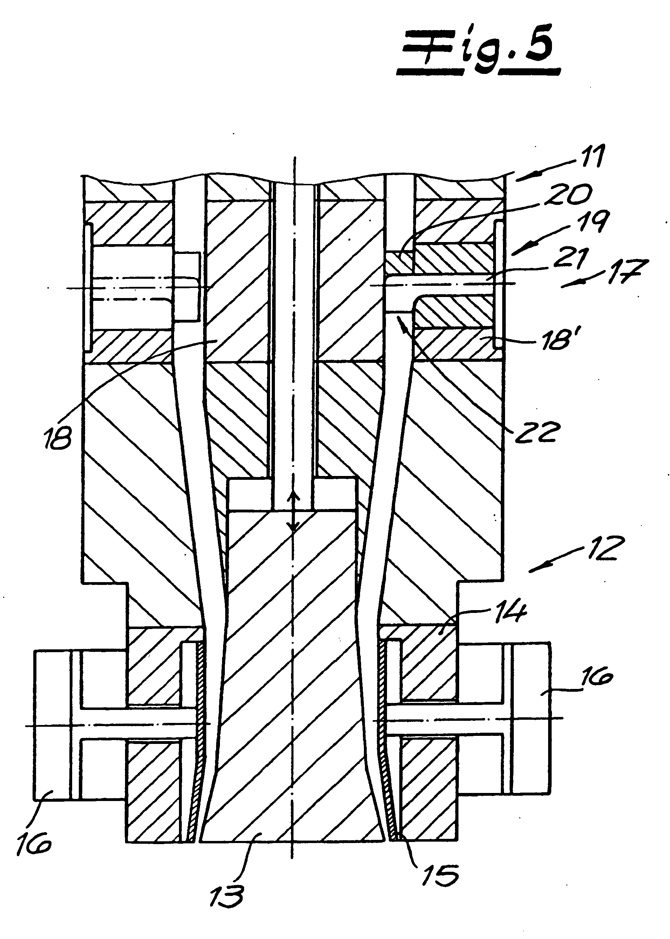

Die Fig. 5 zeigt im Längsschnitt eine Vorrichtung zur Herstellung von schlauchförmigen Vorformlingen 1, die eine oder mehrere Sollbruchstellen 2 aufweisen und im thermoplastischen Zustand einer Blasformanlage zugeführt werden. Zum grundsätzliche Aufbau der Vorrichtung gehören ein Extrusionskopf 11 zur Bildung einer ringförmigen Strömung aus einer Kunststoffschmelze, einer Ringspaltdüse 12, die einen Dorn 13 und einen den Dorn umgebenden Düsenring 14 aufweist. Der Dorn 13 und der Düsenring 14 begrenzen einen Ringspalt, dessen Spaltbreite durch Axialverstellung des Dorns 13 veränderbar ist. Die Axialverstellung des Dorns 13 erfolgt mittels einer programmgesteuerten Vorrichtung. Die Ringspaltdüse 12 kann ferner mit Einrichtungen ausgerüstet sein, um die Geometrie des Düsenspaltes zu verändern. Im Ausführungsbeispiel weist die Ringspaltdüse 12 eine elastische deformierbare Hülse 15 sowie eine oder mehrere auf die Hülse radial wirkende Stelleinrichtungen 16 auf. Die Hülse 15 begrenzt den Fließkanal der Ringspaltdüse 12. Durch Deformation der Hülse 15 ist die Fließkanalgeometrie der Ringspaltdüse 12 veränderbar.

Erfindungsgemäß ist zwischen dem Extrusionskopf 11 und der Ringspaltdüse 12 eine Bauteilgruppe 17 aus zwei konzentrischen Ringen 18, 18' angeordnet, welche einen Fließkanal des Extrusionskopfes 11 mit dem Fließkanal der Ringspaltdüse 12 verbindet. Die Bauteilgruppe 17 weist eine Einrichtung 19 auf, um in der Kunststoffschmelze eine lokal begrenzte Inhomogenität zu erzeugen, die in dem Vorformling 1 eine Bindenaht bildet, deren Zugfestigkeit geringer ist als die Zugfestigkeit eines im Abstand der Bindenaht angeordneten und mit derselben Wandstärke geformten Vorformlingabschnittes. Im Ausführungsbeispiel der Fig. 5 weist die Bauteilgruppe 17 Schmelzeteiler 20 auf, die radial in den von dem inneren Ring 18 und dem äußeren Ring begrenzten Fließkanal vorstehen. Einer vergleichenden Betrachtung der Fig. 5 und 6 entnimmt man, dass die Schmelzeteiler 20 eine Anströmfläche 25 aufweisen. Auch andere Geometrien sind als Schmelzeteiler einsetzbar. Denkbar ist beispielsweise die Ausgestaltung des Schmelzeteilers in Form eines vorstehenden, z. B. zylindrischen Stiftes. In Betracht kommt auch eine Anordnung aus mehreren Stiften, die beispielsweise nebeneinander, untereinander oder untereinander versetzt angeordnet sind und in ihrem Zusammenspiel eine Inhomogenität in der Schmelzeströmung erzeugen. Nach dem Umfließen des Schmelzeteilers 20 vereinigt sich der Schmelzestrom wieder ohne vollständig zu verschweißen.

Dadurch bildet sich entlang der Zusammenfließstellung jeweils eine Bindenaht, die im Vorformling oder in einem vorgeformten Hohlkörper als Sollbruchstelle 2 wirkt. Im Ausführungsbeispiel und gemäß einer bevorzugten Ausführung der Erfindung weisen die Schmelzeteiler 20 jeweils einen Zuführkanal 21 auf, der an der stromabwärtigen Seite des Schmelzeteilers 20 mit einem Auslass 22 endet und der Zuführung von Material dient, das mit der Kunststoffschmelze eine Verbindung geringer Festigkeit eingeht. Das zugeführte Material kann beispielsweise mit einem Trennmittel versetzt sein, wobei die Trennmittelmenge so bemessen ist, dass der Vorformling erst bei seiner Aufweitung in der Blasform entlang der Sollbruchstelle 2 aufreißt. Wenn es sich bei der Kunststoffschmelze um ein Coextrudat handelt, welches mindestens eine polyolefinische Schicht, eine Barriereschicht, aus z. B. EVOH und eine Haftvermittlerschicht zwischen der polyolefinischen Schicht und der Barriereschicht aufweist, wird durch den Schmelzeteiler vorzugsweise das Material der Barriereschicht zugeführt, welches mit der polyolefinischen Schicht nur eine Bindung geringer Festigkeit eingeht.

Im Rahmen der Erfindung liegt es, dass der Schmelzeteiler 20 radial verstellbar an dem inneren oder äußeren Ring 18, 18' der Bauteilgruppe 17 angeordnet ist. Ferner kann an den Schmelzeteiler 20 eine Stelleinrichtung angeschlossen sein, welche nach Maßgabe einer Programmsteuerung den Schmelzeteiler 20 während der Vorformlingsextrusion radial verstellt, so dass sich in Vorformlingslängsrichtung unterschiedlich stark ausgeprägte Inhomogenitäten bilden. Insbesondere kann die Radialverstellung des Schmelzeteilers 20 auch so gesteuert werden, dass sich die festigkeitsmindernde Bindenaht nur über eine Abschnitt der Vorformlinge 1 erstreckt und dass Endabschnitte der Vorformlinge, die beim Blasformen zu einem von dem Blasformteil abzutrennenden Abfallbutzen umgeformt werden, keine Schwächung durch eine Sollbruchstelle 2 aufweisen. Mittels einer nicht dargestellten Vorrichtung kann der Schmelzeteiler 20 gegebenenfalls auch während der Vorformlingsextrusion in Umfangsrichtung verschwenkt werden, um in der Schmelzeströmung eine Inhomogenität zu erzeugen, die in dem Vorformling eine Sollbruchstelle 2 bildet, welche sich mit einem Kurvenprofil in Vorformlingslängsrichtung erstreckt.

Zur Beeinflussung der Bindenahtfestigkeit und/oder der Umfangslage der Bindenaht kann der Schmelzeteiler 20 auch um seine Achse verschwenkt werden.

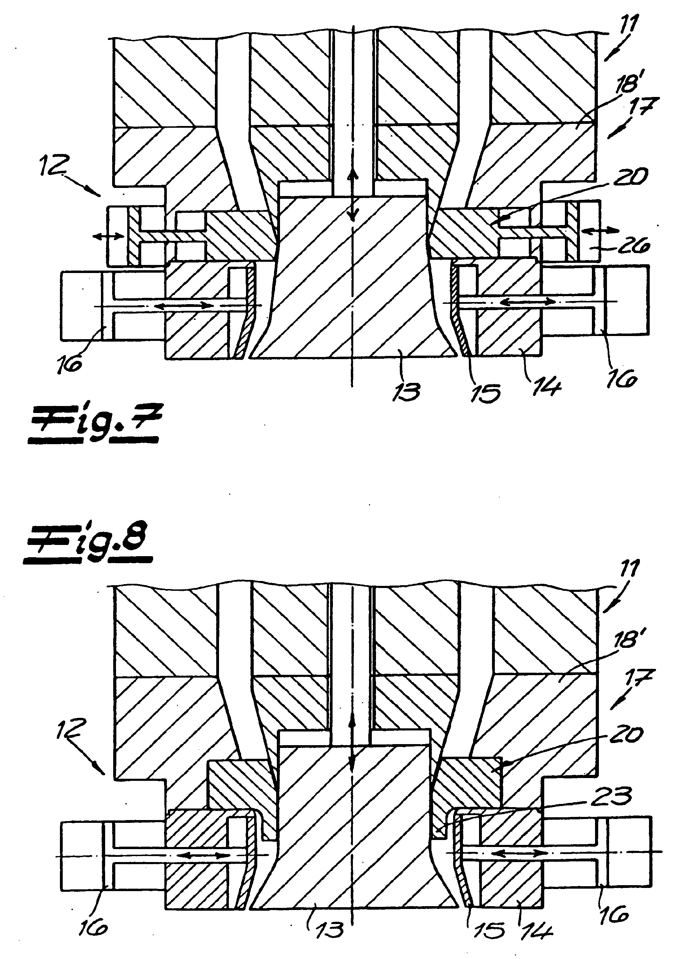

Im Ausführungsbeispiel der Fig. 7 ist der äußere Ring 18' der Bauteilgruppe 17 in den Übergang zwischen dem Extrusionskopf 11 und der Ringspaltdüse 12 integriert. Der innere Ring 18 entfällt. Die in Fig. 7 dargestellte Ausführung zeichnet sich durch eine geringe Einbauhöhe aus. Bei einem Umrüsten sind weniger Teile zu montieren. Die Schmelzeteiler sind in dem dargestellten Ausführungsbeispiel an Stelleinrichtungen 26 angeschlossen, welche nach Maßgabe einer Programmsteuerung den zugeordneten Schmelzeteiler während der Vorformlingsextrusion radial verstellen, so dass sich in Vorformlingslängsrichtung unterschiedlich stark ausgeprägte Inhomogenitäten bilden. Dadurch können Vorformlinge hergestellt werden, deren Sollbruchstellen sich nur über einen Abschnitt der Vorformlinge erstrecken. Es versteht sich, dass anstelle der Stelleinrichtungen 26 auch Stellspindeln vorgesehen werden können, die eine manuelle Einstellung der Schmelzeteiler ermöglichen. In dem in Fig. 7 dargestellten Ausführungsbeispiel werden die Inhomogenitäten in der Schmelzeströmung dadurch erzeugt, dass die Schmelze die Schmelzeteiler umströmt und sich stromabwärts vereinigt, ohne wieder vollständig durch Stoffschluss zu verbinden. Die Zuführung eines Additivs ist im Ausführungsbeispiel nicht vorgesehen. Es versteht sich, dass die Schmelzeteiler auch mit einer Einrichtung für die Zuführung eines Additivs versehen werden können.

Im Ausführungsbeispiel der Fig. 8 weist der Schmeizeteiler 20 ein Schwert 23 auf, welches sich bis in den Fließkanal der Ringspaltdüse 12 hinein erstreckt. Dadurch ist die Wirkung des Schmelzeteilers in den Bereich der Ringspaltdüse hinein verlagert. Die Zuführung eines Additivs ist nicht vorgesehen. Auch bei dieser Ausgestaltung kann der Schmelzeteiler gegebenenfalls mit einem Zuführkanal zur Zuführung eines Additivs versehen werden.

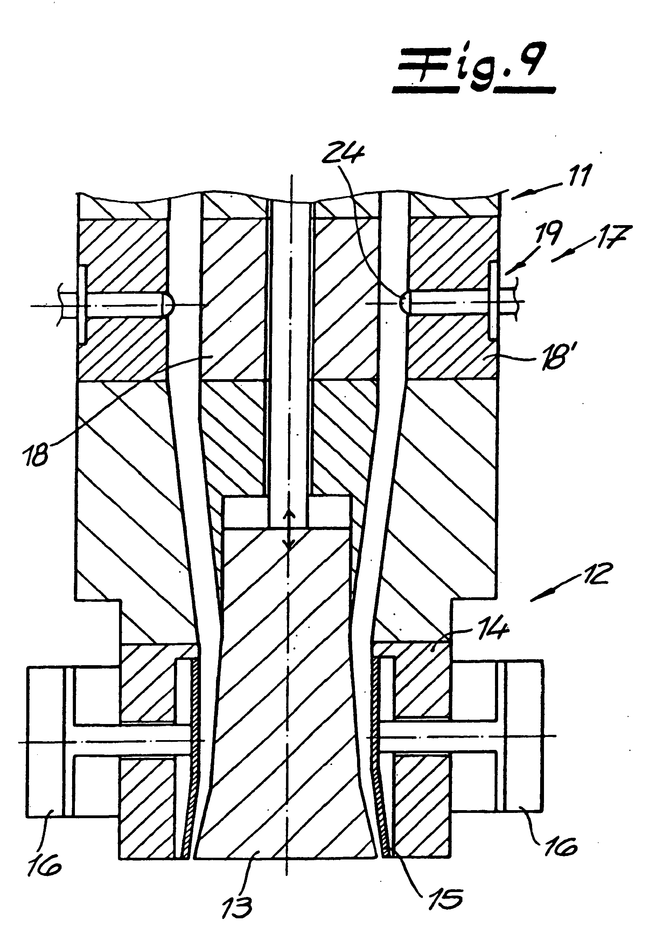

Bei der in Fig. 9 dargestellten Vorrichtung ist an dem inneren oder äußeren Ring 18, 18' der Bauteilgruppe 17 mindestens eine Düse 24 für die Injektion eines Treibmittels in den Schmelzestrom angeordnet. Das in die Schmelzeströmung injizierte Treibmittel erzeugt in der Kunststoffschmelze eine Porenstruktur als festigkeitsmindernde, lokal begrenzte Inhomogenität. Mit der in Fig. 7 dargestellten Vorrichtung können die in den Fig. 4a und 4b dargestellten Vorformlinge 1 hergestellt werden.

Wenn das Treibmittel durch eine Mehrzahl in Umfangsrichtung nebeneinander angeordneter Düsen oder durch eine am Umfang des Fließkanals angeordnete ringförmige Schlitzdüse zugeführt wird, lassen sich horizontale Sollbruchstellen 2 gemäß der Darstellung in Fig. 2b erzeugen. Die Treibmittelmenge wird als Impuls aufgegeben, so dass die Inhomogenität sich im Wesentlichen horizontal erstreckt und vorzugsweise einen Ring bildet.

Die beschriebenen Maßnahmen können beliebig miteinander kombiniert werden, um je nach Anforderung vertikal verlaufende gradlinige, vertikal verlaufende gekrümmte oder ringförmige horizontale Sollbruchstellen in den Vorformlingen zu erzeugen.

Die erfindungsgemäße Vorrichtung hat den Vorteil, dass bestehende Ringspaltdüsen 14 und Extrusionsköpfe 11 ohne technische Modifikation verwendet werden können. Zur Durchführung des erfindungsgemäßen Verfahrens ist lediglich die Bauteilgruppe 17 zwischen einem schon vorhandenen Extrusionskopf 11 und der Ringspaltdüse 14 einzubauen. Durch Ausbau der Bauteilgruppe 17 kann die Maschine jederzeit auch wieder in konventionell betriebenen Blasformanlagen eingesetzt werden. Schließlich kann die erfindungsgemäße Bauteilgruppe auch mit unterschiedlichen Ringspaltdüsen kombiniert werden, wenn unterschiedliche Produkte unter Verwendung des erfindungsgemäßen Verfahrens hergestellt werden sollen.

## Patentansprüche

1. Verfahren zur Herstellung eines schlauchförmigen Vorformlings, der mindestens eine Sollbruchstelle aufweist und in thermoplastischem Zustand einer Blasformanlage zugeführt wird,
wobei in einem Extrusionskopf eine ringförmige Strömung aus einer Kunststoffschmelze gebildet wird,
wobei die Kunststoffschmelze einer Ringspaltdüse zugeführt wird, die einen von einem Dorn und einem Düsenring begrenzten Ringspalt aufweist,
wobei aus dem Ringspalt ein schlauchförmiger Vorformling austritt, dessen Wandstärke zumindest in Vorformlingslängsrichtung durch eine mit der Vorformlingsextrusion ablaufende programmgesteuerte Änderung der Düsenspaltbreite verändert wird, und
wobei in der Schmelzeströmung vor dem Eintritt in die Ringspaltdüse mindestens eine lokal begrenzte Inhomogenität erzeugt wird, die in dem Vorformling eine Bindenaht bildet, deren Zugfestigkeit geringer ist als die Zugfestigkeit eines im Abstand zur Sollbruchstelle angeordneten und mit derselben Wandstärke geformten Vorformlingsabschnittes,
**dadurch gekennzeichnet, dass** der Vorformling als Schlauch in einer Blasform der Blasformanlage positioniert wird und zu einem späteren, definierten Zeitpunkt während oder nach dem Einformen in einem nachfolgenden Prozessschritt entlang der Sollbruchstelle getrennt wird, wobei der Vorformling
i) beim Öffnen der Blasform entlang seiner Sollbruchstelle aufgetrennt wird, indem der Vorformling durch Druck beaufschlagt oder mittels Hinterschneidungen in den Blasformhälften der sich öffnenden Blasform fixiert wird, oder
ii) durch gezielte mechanische Beanspruchungen beim Einformen in die Blasform oder durch Aufgabe von Vorblasluft getrennt wird.

2. Verfahren nach Anspruch 1, **dadurch gekennzeichnet, dass** die Schmelzeströmung zur Erzeugung einer Inhomogenität lokal gekühlt oder erhitzt wird.

3. Verfahren nach Anspruch 1, **dadurch gekennzeichnet, dass** die Inhomogenität zur Erzeugung einer Sollbruchstelle dadurch gebildet wird, dass ein Teil der Kunststoffschmelze vernetzt wird.

4. Verfahren nach Anspruch 1, **dadurch gekennzeichnet, dass** die Inhomogenität mit einem Schmelzeteiler erzeugt wird; der radial in den Fließkanal vorsteht, wobei die Schmelze den Schmelzeteiler umströmt und sich stromabwärts vereinigt ohne wieder vollständig durch Stoffschluss zu verbinden.

5. Verfahren nach Anspruch 4, **dadurch gekennzeichnet, dass** dem Schmelzeteiler ein Material zugeführt wird, das an der stromabwärtigen Seite des Schmelzeteilers mit der Kunststoffschmelze des Vorformlings eine Verbindung geringer Festigkeit eingeht.

6. Verfahren nach Anspruch 5, **dadurch gekennzeichnet, dass** durch Coextrusion eine mehrschichtige Schmelzeströmung erzeugt wird, die mindestens eine polyolefinische Schicht, eine Barriereschicht und eine Haftvermittlerschicht zwischen der polyolefinischen Schicht und der Barriereschicht aufweist, und dass im Schmelzeteiler das Material der Barriereschicht zugeführt wird, das mit der polyolefinischen Schicht eine Verbindung geringer Festigkeit bildet.

7. Verfahren nach einem der Ansprüche 4 bis 6, **dadurch gekennzeichnet, dass** der Schmelzeteiler während der Vorformlingsextrusion radial so verstellt wird, dass sich in Vorformlingslängsrichtung unterschiedlich stark ausgeprägte Inhomogenitäten bilden.

8. Verfahren nach Anspruch 7, **dadurch gekennzeichnet, dass** die Radialverstellung des Schmelzeteilers so gesteuert wird, dass sich die festigkeitsmindernde Bindenaht nur über einen Abschnitt des Vorformlings erstreckt, und dass Endabschnitte des Vorformlings, die beim Blasformen zu einem von den Blasform abzutrennenden Abfallbutzen umgeformt werden, keine Schwächung durch eine Sollbruchstelle aufweisen.

9. Verfahren nach einem der Ansprüche 4 bis 8, **dadurch gekennzeichnet, dass** der Schmelzeteiler während der Vorformlingsextrusion in Umfangsrichtung verschwenkt wird, um in der Schmelzeströmung eine Inhomogenität zu erzeugen, die in dem Vorformling eine Sollbruchstelle bildet, welche sich mit einem Kurvenprofil in Vorformlingslängsrichtung erstreckt.

10. Verfahren nach Anspruch 1, **dadurch gekennzeichnet, dass** der Schmelzeströmung zur Bildung einer Sollbruchstelle ein Material unter Überdruck zugeführt wird, welches die Schmelzeströmung lokal verdrängt und mit der Kunststoffschmelze eine Verbindung geringer Festigkeit eingeht.

11. Verfahren nach Anspruch 10, **dadurch gekennzeichnet, dass** in die Schmelzeströmung ein Treibmittel injiziert wird, welches in der Kunststoffschmelze eine Porenstruktur als festigkeitsmindernde, lokal begrenzte Inhomogenität erzeugt.

12. Verfahren nach Anspruch 11, **dadurch gekennzeichnet, dass** das Treibmittel durch mindestens eine am inneren oder äußeren Umfang des Fließkanals angeordnete Düse zugeführt wird, wobei die Düse an einem drehbaren Ring angeordnet ist, und dass durch Drehen des Ringes während der Vorformlingsextrusion eine festigkeitsmindernde Inhomogenität in der Schmelzeströmung erzeugt wird, die in dem Vorformling eine Sollbruchstelle bildet, welche sich mit einem Kurvenprofil in Vorformlingslängsrichtung erstreckt.

13. Verfahren nach Anspruch 12, **dadurch gekennzeichnet, dass** das Treibmittel durch eine Mehrzahl in Umfangsrichtung nebeneinander angeordneter Düsen oder durch eine am Umfang des Fließkanals angeordnete ringförmige Schlitzdüse zugeführt wird und dass die Treibmittelmenge als Impuls aufgegeben wird, so dass die Inhomogenität sich im Wesentlichen horizontal erstreckt und vorzugsweise einen Ring bildet.

14. Verwendung einer Vorrichtung mit
einem Extrusionskopf (11) zur Bildung einer ringförmigen Strömung aus einer Kunststoffschmelze,
einer Ringspaltdüse (12), die einen Dorn (13) und einen den Dorn umgebenden Düsenring (14) aufweist,
einer programmgesteuerten Vorrichtung zur Verstellung des Dorns (13) oder eines den Düsenspalt begrenzenden beweglichen Teils des Düsenringes (14),
einer Blasformanlage und
einer Einrichtung (19) zur Erzeugung einer lokal begrenzten Inhomogenität in der Kunststoffschmelze, die in dem Vorformling eine Bindenaht bildet, deren Zugfestigkeit geringer ist als die Zugfestigkeit eines im Abstand zur Bindenaht angeordneten und mit derselben Wandstärke geformten Vorformlingabschnittes, wobei die Einrichtung zur Erzeugung einer lokal begrenzten Inhomogenität Teil einer zwischen dem Extrusionskopf (11) und der Ringspaltdüse (12) angeordneten Bauteilgruppe (17) ist, welcher einen Fließkanal des Extrusionskopfes (11) mit dem Fließkanal der Ringspaltdüse (12) verbindet, zur Durchführung des Verfahrens nach einem der Ansprüche 1 bis 13.

15. Verwendung der Vorrichtung nach Anspruch 14, **dadurch gekennzeichnet, dass** die Bauteilgruppe (17) einen Schmelzeteiler (20) aufweist, der radial in dem Fließkanal vorsteht.

16. Verwendung der Vorrichtung nach Anspruch 15, **dadurch gekennzeichnet, dass** der Schmelzeteiler (20) ein Schwert (23) aufweist, welches sich bis in den Fließkanal der Ringspaltdüse (12) hinein erstreckt.

17. Verwendung der Vorrichtung nach Anspruch 15 oder 16, **dadurch gekennzeichnet, dass** der Schmelzeteiler (20) einen Zuführkanal (21) aufweist, der an der stromabwärtigen Seite des Schmelzeteilers mit einem Auslass (22) endet und der Zuführung eines Materials dient, das mit der Kunststoffschmelze eine Verbindung geringer Festigkeit eingeht.

18. Verwendung der Vorrichtung nach einem der Ansprüche 15 bis 17, **dadurch gekennzeichnet, dass** der Schmelzeteiler (20) radial verstellbar, um seine Achse verschwenkbar und/oder in Umfangsrichtung verstellbar angeordnet ist.

19. Verwendung der Vorrichtung nach Anspruch 18, **dadurch gekennzeichnet, dass** der Schmelzeteiler (20) an eine Stelleinrichtung angeschlossen ist, welche nach Maßgabe einer Programmsteuerung den Schmelzeteiler (20) während der Vorformlingsextrusion verstellt.

20. Verwendung der Vorrichtung nach Anspruch 14, **dadurch gekennzeichnet, dass** die Bauteilgruppe (17) mindestens eine Düse (24) für die Injektion eines Treibmittels in den Schmelzestrom oder für die Zuführung eines Materialstromes, der die Schmelzeströmung lokal verdrängt und mit der Kunststoffschmelze eine Verbindung geringer Festigkeit eingeht, aufweist.

21. Verwendung der Vorrichtung nach Anspruch 20, **dadurch gekennzeichnet, dass** die Bauteilgruppe (17) einen in Umfangsrichtung drehbaren Stellring aufweist, an den mindestens eine Düse (24) für die Injektion eines Treibmittels in den Schmelzestrom oder für die Zuführung eines Materialstromes, der die Schmelzeströmung lokal verdrängt und mit der Kunststoffschmelze eine Verbindung geringer Festigkeit eingeht, angeordnet ist.

22. Verwendung der Vorrichtung nach Anspruch 21, **dadurch gekennzeichnet, dass** dem Stellring eine Betätigungseinrichtung zugeordnet ist, die nach einem mit der Vorformlingsextrusion ablaufenden Programm Drehbewegungen des Stellringes steuert.

## Claims

1. A process for producing a tubular preform, which comprises at least one predetermined breaking point and which is fed in the thermoplastic state in a blow-mold device,
wherein there is an annular flow formed of a plastic melt in an extrusion head,
wherein the plastic melt is fed to an annular gap nozzle, which comprises a mandrel and a nozzle ring - localized annular gap,
wherein a tubular preform discharges from the annular gap, the wall thickness of the tubular perform is adjusted at least in the longitudal direction to the preform extrusion- flowing program regulated changes of the nozzle gap width, and
wherein the melt flow prior to entry into the annular gap generates at least one localized inhomogeneity, which forms in the preform a weld, whose tensile strength is lower than tensile strength of the segment of the preform arranged at the distance of the breaking point and formed with the same wall thickness,
**characterized in that** the preform is positioned as a tube in a blow-mold of the blow-mold device and will be released along the breaking point in a later defined point of time during or after the forming in one of the following steps of the process, wherein the preform:
i) is released by the opening of the blow-mold along the breaking point, whereby the preform is fixed with pressure impinges or is fixed with indentations in the halfs of the opening blow-mold, or
ii) is released by targeted mechanical stress at forming into the blow-mold or with an airspray.

2. A process of claim 1, **characterized in that** the melt flow is locally cooled or heated in order to form an inhomogeneity.

3. A process of claim 1, **characterized in that** the inhomogeneity for the production of the breaking point is formed by that a part of the plastic melt is crosslinked.

4. A process of claim 1, **characterized in that** the inhomogeneity is generated by a melt splitter projecting radially into the flow channel, wherein the melt flows around the melt splitter and unites downstreams without being connected again with a material bond.

5. A process of claim 4, **characterized in that** a material is brought into the melt splitter, which at the flow-side of the melt splitter forms with the plastic melt of the preform a connection of a lower strength.

6. A process of claim 5, **characterized in that** a multilayer melt stream is produced by co-extrusion, the multilayer melt stream comprises at least one polyolefin layer, one barrier layer and one adhesive layer between the polyolefin layer and the barrier layer, and **in that** the material of the barrier layer is fed to the melt splitter, whereby the material of the barrier layer forms with the polyolefin layer a connection of lower strength.

7. A process of claims 4-6, **characterized in that** the melt splitter is positioned radially during the preform-extrusion in such a way that in the longitudinal direction of the preform are formed inhomogeneities of various strengths.

8. A process of claim 7, **characterized in that** the radial position of the melt splitter is adjusted in such a way that the strength-reducing weld extends only over a portion of the preforms, und **in that** the end portions of the preforms, which are formed during blow molding to be separated from the blow-mold, do not show any weakening by a predetermined breaking point.

9. A process of claims 4-8, **characterized in that** the melt splitter is pivoted during the preform extrusion in the circumferential direction, in order to generate an inhomogeneity of the melt flow, which forms a predetermined breaking point in the preform, which extends with a curved profile in the longitudinal direction of the preform.

10. A process of claim 1, **characterized in that** the melt flow is fed for the forming of a predetermined breaking point under the pressure, which displaces the melt flow locally and forms with the plastic melt a connection of lower strength.

11. A process of claim 10, **characterized in that** a blowing agent is injected into the melt flow, which generates a pore structure in a plastic melt as strength-reducing, localized inhomogeneity.

12. A process of claim 11, **characterized in that** the blowing agent is fed through at least one on the inner or outer circumferences of the flow channel arranged nozzles, whereby the nozzle is arranged on a rotatable ring and **in that** a strength-reducing ihomogeneity is generated in the melt flow by rotation of the ring during the preform extrusion , which forms a predetermined breaking point in the preform, which extends with a curve profile in the longitudinal direction of the preform.

13. A process of claim 12, **characterized in that** the blowing agent is fed through a plurality of circumferentially juxtaposed nozzles or through a circumferential nozzle arranged on a circumference of the flow channel und **in that** the amount of the blowing agent is applied as a pulse, so that the inhomogeneity extends substantially horizontally and forms preferably a ring.

14. Use of an apparatus with an extrusion head (11) for forming an annular flow from a plastic melt, an annular gap nozzle (12) having a mandrel (13) and a nozzle ring (14) surrounding the mandrel, a program-controlled device for the adjustment of the mandrel (13) or one of the nozzle gap delimiting movable parts of the nozzle ring (14), a blow-form device and a device for generation of a localized inhomogeneity in the plastic melt , which forms a weld in the preform, whose tensile strength is lower than the tensile strength of a preform portion which is arranged at the distance from the weld and is formed with the same wall thickness, whereby the device for the production of the localized inhomogeneous portion is one of the component groups (17) arranged between the extrusion head (11) and the annular nozzle (12), which connects a flow channel of the extrusion head (11) with the flow channel of the annual nozzle (12), for carrying out the process of claims 1-13.

15. Use of the apparatus of claim 14, **characterized in that** the component group (17) comprises a melt splitter (20), projecting radially into the flow channel.

16. Use of the apparatus of claim 15, **characterized in that** the melt splitter (20) comprises a blade (23), which extends into the flow channel of the annular nozzle (12).

17. Use of the apparatus of claim 15 or claim 16, **characterized in that** hat the melt splitter (20) comprises a feeding channel (21), ending at the downstream side of the melt splitter with an outlet (22) and serves for feeding of a material, which forms with the plastic melt a connection of lower strength.

18. Use of the apparatus of claims 15-17, **characterized in that** the melt splitter (20) is so arranged that it is radially adjustable, adjustable to its pivot axis and/or adjustable in the circumferential direction.

19. Use of the apparatus of claim 18, **characterized in that** the melt splitter (20) is connected to an adjusting device, which adjusts in accordance with a program control the melt splitter (20) during the preform extrusion.

20. Use of the apparatus of claim 14, **characterized in that** the component group (17) comprises at least one nozzle (24) for the injection of the blowing agent in the melt flow or for the feeding of a material flow, which displaces the melt flow locally and forms with the plastic melt a connection of lower strength.

21. Use of the apparatus of claim 20, **characterized in that** the component group (17) comprises a circumferential rotatable collar, on which is arranged a nozzle (24) for the injection of the blowing agent in the melt flow or for the feeding of a material flow, which displaces the melt flow locally and forms with the plastic melt a connection of lower strength.

22. Use of the apparatus of claim 21, **characterized in that** the adjusting ring is associated with an actuating device, which according to the program running with the preform extrusion controls rotational movement of the adjusting ring.

## Revendications

1. Procédé d'obtention d'une pré-ébauche en forme de tuyau qui comporte au moins une ligne de rupture de consigne et est transférée à l'état thermoplastique à une installation de moulage par soufflage,
un flux annulaire de masse de matériau synthétique fondue étant formé dans une tête d'extrusion,
la masse de matériau synthétique fondue étant transférée à une buse à passage annulaire comportant un passage annulaire limité par un mandrin et par une couronne de buse,
du passage annulaire sortant une pré-ébauche en forme de tuyau dont l'épaisseur de paroi est modifiée, au moins dans la direction longitudinale de la pré-ébauche suite à une modification de la largeur du passage de la buse commandée par un programme se déroulant lors de l'extrusion de la pré-ébauche, et
dans le flux de masse fondu étant produite, en amont de son entrée dans la buse à passage annulaire, au moins une inhomogénéité axialement limitée qui forme, dans la pré-ébauche, un joint collé dont la résistance à la traction est inférieure à la résistance à la traction d'une partie de la pré-ébauche située à distance de la ligne de rupture de consigne et moulé avec la même épaisseur de paroi,
**caractérisé en ce que**
la pré-ébauche est positionnée, sous la forme d'un tuyau dans un moule de soufflage de l'installation de moulage par soufflage, et est coupée le long de la ligne de rupture de consigne, à un instant ultérieur défini, pendant ou après le moulage dans une étape de procédé ultérieure, la pré-ébauche étant :
(i) coupée le long de la ligne de rupture de consigne lors de l'ouverture du moule de soufflage en la sollicitant en pression, ou fixée au moyen de contre dépouilles situées dans les moitiés du moule de soufflage qui s'ouvre, ou
(ii) coupée par des sollicitations mécaniques ciblées lors du moulage dans le moule de soufflage ou par alimentation d'air de présoufflage.

2. Procédé conforme à la revendication 1,
**caractérisé en ce que**
le flux de masse fondue est localement refroidi ou chauffé pour obtenir une inhomogénéité.

3. Procédé conforme à la revendication 1,
**caractérisé en ce que**
l'inhomogénéité permettant l'obtention d'une ligne de rupture de consigne est formée en réticulant une partie de la masse de matériau synthétique fondue.

4. Procédé conforme à la revendication 1,
**caractérisé en ce que**
l'inhomogénéité est obtenue avec un élément répartiteur de matériau fondu s'étendant radialement dans le canal d'écoulement, la masse fondue s'écoulant autour de cet élément répartiteur et se rassemblant en aval de celui-ci sans liaison complète par la matière.

5. Procédé conforme à la revendication 4,
**caractérisé en ce qu'**
on transfère à l'élément répartiteur de masse fondue un matériau permettant d'obtenir du côté aval de cet élément une liaison de plus faible résistance avec la masse de matériau synthétique fondue de la pré-ébauche.

6. Procédé conforme à la revendication 5,
**caractérisé en ce que**
l'on produit par co-extrusion un flux de masse fondue à plusieurs couches comportant au moins une couche en polyoléfine, une couche formant barrière et une couche d'agent adhésif située entre la couche en polyoléfine et la couche barrière, et, on transfère à l'élément répartiteur de masse fondue le matériau de la couche formant barrière qui forme avec la couche en polyoléfine une liaison de plus faible résistance.

7. Procédé conforme à l'une des revendications 4 à 6,
**caractérisé en ce que**
l'élément répartiteur de masse fondue est réglé radialement pendant l'extrusion de la pré-ébauche de sorte qu'il se forme dans la direction longitudinale de la pré-ébauche des inhomogénéités plus ou moins fortement marquées.

8. Procédé conforme à la revendication 7,
**caractérisé en ce que**
le réglage radial de l'élément répartiteur de masse fondue est commandé de sorte que le joint collé diminuant la résistance, ne s'étende que sur une partie de la pré-ébauche, et que les parties d'extrémité de la pré-ébauche qui, lors du moulage par soufflage forment des renflements résiduels devant être séparés du moule de soufflage ne soient pas affaiblis par une ligne de rupture de consigne.

9. Procédé conforme à l'une des revendications 4 à 8,
**caractérisé en ce que**
l'élément répartiteur de masse fondue est déplacé par pivotement dans la direction périphérique au cours de l'extrusion de la pré-ébauche pour introduire dans le flux de masse fondue une inhomogénéité qui forme dans la pré-ébauche une ligne de rupture de consigne qui s'étend avec un profil incurvé dans la direction longitudinale de cette pré-ébauche.

10. Procédé conforme à la revendication 1,
**caractérisé en ce qu'**
on transfère dans le flux de masse fondue, pour former une ligne de rupture de consigne, un matériau en surpression qui déplace localement le flux de masse fondue et forme avec la masse de matériau synthétique fondue une liaison de plus faible résistance.

11. Procédé conforme à la revendication 10,
**caractérisé en ce que**
l'on injecte dans le flux de masse fondue un agent propulseur qui produit dans la masse de matériau synthétique fondue une structure poreuse constituant l'inhomogénéité limitée localement diminuant la résistance.

12. Procédé conforme à la revendication 11,
**caractérisé en ce que**
l'agent propulseur est fourni par au moins une buse située à la périphérie interne ou à la périphérie externe du canal d'écoulement, cette buse étant montée sur une couronne mobile en rotation et la rotation de cette couronne au cours de l'extrusion de la pré-ébauche permettant d'obtenir dans le flux de masse fondue une inhomogénéité diminuant la résistance qui forme dans la pré-ébauche une ligne de rupture de consigne qui s'étend avec un profil incurvé dans la direction longitudinale de cette pré-ébauche.

13. Procédé conforme à la revendication 12,
**caractérisé en ce que**
l'agent propulseur est fourni par un ensemble de buses montées côte à côte dans la direction périphérique ou par une buse annulaire fendue montée à la périphérie du canal d'écoulement, et la quantité d'agent propulseur est ajoutée sous forme d'impulsions de sorte l'inhomogénéité s'étende essentiellement horizontalement et forme de préférence un anneau.

14. Utilisation d'un dispositif comportant :
- une tête d'extrusion (11) pour former un flux annulaire d'une masse fondue de matériau synthétique,
- une buse ayant un passage annulaire (12) comportant un mandrin (13) et une couronne de buse (14) entourant ce mandrin,
- un dispositif commandé par un programme pour régler le mandrin (13) ou une partie mobile de la couronne de buse (14) limitant le passage de la buse,
- une installation de moulage par soufflage, et
- un dispositif (19) permettant de former dans la masse de matériau synthétique fondue une inhomogénéité localement limitée qui forme dans la pré-ébauche un joint collé dont la résistance à la traction est plus faible que la résistance à la traction d'une partie de la pré-ébauche située à distance de ce joint collé et moulée avec la même épaisseur de paroi, ce dispositif permettant de former une inhomogénéité localement limitée étant une partie d'un groupe de composants (17) monté entre la tête d'extrusion (11) et la buse à passage annulaire (12) et qui relie un canal d'écoulement de la tête d'extrusion (11) avec le canal d'extrusion de la buse à passage annulaire (12) pour la mise en oeuvre du procédé conforme à l'une des revendications 1 à 13.

15. Utilisation du dispositif conforme à la revendication 14,
**caractérisée en ce que**
le groupe de composants (17) comporte un élément répartiteur de masse fondue (20) qui s'étend radialement dans le canal d'écoulement.

16. Utilisation du dispositif conforme à la revendication 15,
**caractérisée en ce que**
l'élément répartiteur de masse fondue (20) comporte une ailette (23) qui s'étend jusque dans le canal d'écoulement de la buse à passage annulaire (12).

17. Utilisation du dispositif conforme à la revendication 15 ou 16,
**caractérisée en ce que**
l'élément répartiteur de masse fondue (20) comporte un canal d'alimentation (21) qui se termine au niveau du côté aval de l'élément répartiteur de masse fondue par une sortie (22) et qui sert au transfert d'un matériau qui forme avec la masse de matériau synthétique fondue une liaison de plus faible résistance.

18. Utilisation du dispositif conforme à l'une des revendications 15 à 17,
**caractérisée en ce que**
l'élément répartiteur de masse fondue (20) est réglable radialement, monté pivotant autour de son axe et/ou réglable en direction périphérique.

19. Utilisation du dispositif conforme à la revendication 18,
**caractérisée en ce que**
l'élément répartiteur de masse fondue (20) est monté sur un dispositif de réglage qui règle cet élément (20) conformément aux indications d'une commande par programme pendant l'extrusion de la pré-ébauche.

20. Utilisation du dispositif conforme à la revendication 14,
**caractérisée en ce que**
le groupe de composants (17) comporte au moins une buse (24) permettant l'injection d'un agent propulseur dans le flux de masse fondue ou le transfert d'un flux de matériau qui repousse localement le flux de masse fondue et permet d'obtenir avec la masse de matériau synthétique fondue une liaison de plus faible résistance.

21. Utilisation du dispositif conforme à la revendication 20,
**caractérisée en ce que**
le groupe de composants (17) comporte une bague de réglage mobile en rotation en direction périphérique sur laquelle est montée au moins une buse (24) pour permettre l'injection d'un agent propulseur dans le flux de masse fondue ou l'introduction d'un flux de matériau qui repousse localement le flux de masse fondue et permet d'obtenir avec le flux de masse fondue une liaison de plus faible résistance.

22. Utilisation du dispositif conforme à la revendication 21,
**caractérisé en ce qu'**
à la bague de réglage est associé un dispositif d'actionnement qui commande les mouvements de rotation de cette bague de réglage conformément à un programme se déroulant avec l'extrusion de la pré-ébauche.
